# EUROPÄISCHE PATENTSCHRIFT

(11) **EP 2 409 834 B1**
(45) Veröffentlichungstag und Bekanntmachung des Hinweises auf die Patenterteilung: **05.03.2014**
(21) Anmeldenummer: 11168158.1
(22) Anmeldetag: 31.05.2011
(51) Int. Cl.: B32B 17/10, F41H 5/04, F41H 5/26

(54) **Laminiertes, transparentes Scheibenset, Verfahren zu dessen Herstellung und Biegung und dessen Verwendung**
Laminated transparent glazing, method for producing and bending the same and use of same
Ensemble de vitre laminé et transparent, son procédé de fabrication et de courbure et son utilisation

(30) Priorität: 23.07.2010 DE 102010032092
(43) Veröffentlichungstag der Anmeldung: 25.01.2012
(73) Patentinhaber: Schott AG, 55122 Mainz (DE)
(72) Erfinder: Langsdorf, Andreas, 55218 Ingelheim (DE); Heiss, Markus, 65474 Bischofsheim (DE); Moseler, Doris, 55257 Budenheim (DE); Ohlinger, Axel, 65205 Wiesbaden (DE); Seibert, Volker, 65239 Hochheim (DE); Becker, Otmar, 63225 Langen (DE); Rüdinger, Bernd, 55286 Wörrstadt (DE); Zachau, Thilo, 64625 Bensheim (DE)

(56) Entgegenhaltungen:
- EP-A1- 2 191 962
- WO-A1-2010/080699
- WO-A1-2010/121986
- DE-B1- 2 758 581
- DE-U1-202007 001 565
- GB-A- 2 078 169

## Beschreibung

Laminiertes, transparentes Scheibenset, Verfahren zu dessen Herstellung und Biegung und dessen Verwendung

Die Erfindung betrifft hoch beschussfeste, nicht-ebene, insbesondere 2D-oder 3D-gebogene transparente Verglasungen mit geringer Gesamtdicke, insbesondere für den Einsatz in geschützten Fahrzeugen. Im besonderen betrifft die Erfindung auch die Herstellung von nicht-ebenen, beschussfesten, transparenten Verglasungen, insbesondere zur Verwendung in Fahrzeugen, die eine Beschussfestigkeit nach Stanag Level 2 erfüllen und eine Gesamtdicke von unter 65mm, bevorzugt unter 63mm und besonders bevorzugt unter 60mm aufweisen, insbesondere solche, die mehr als eine Art sprödbrüchigen Materiales enthalten.

Beschussfeste Verglasungen bestehen in der Regel aus mehreren Glas-, Spezialglas-, Glaskeramik-, transparenten Keramik- bzw. Kunststoffscheiben spezieller Dicken, die mittels Folien oder Kunstharzen aufeinander laminiert werden. Die Beschussfestigkeit wird dabei sowohl durch die Materialwahl, die Stärke der einzelnen Materialien und die resultierende Gesamtdicke wesentlich bestimmt. Für höhere Beschussfestigkeiten resultieren somit Gesamtdicken von deutlich über 40mm, was um ein Vielfaches über den im Standardkraftfahrzeug üblichen Gesamtscheibendicken liegt. Auch die Dicken der im Laminat befindlichen Einzelscheiben sind in der Regel deutlich größer, als bei Standardkraftfahrzeugverglasungen üblich (z.B. im Bereich von 5-10mm).

Darüber hinaus hat sich bei beschussfesten Verglasungen der Einsatz von Spezialgläsern bewährt. So werden Borosilikatgläser wie z.B. Borofloat 33, Borofloat 40, sowie Glaskeramiken eingesetzt, um besonders beschusssichere Verglasungen mit niedrigem Gesamtgewicht pro Flächeneinheit herzustellen, wie in der DE 10 2010 013 641 A1 beschrieben.

Für den Einsatz insbesondere in Fahrzeugen ist die Gesamtdicke des Verbundes wichtig. Häufig soll hier nämlich das visuelle äußere Erscheinungsbild des Fahrzeuge im Vergleich zum ungeschützten Modell gar nicht oder zumindest möglichst wenig verändert werden. Die gesamte Dicke der Verglasung und der den Verbund tragenden Rahmenkonstruktion muss daher in das Fahrzeuginnere wachsen. Eine zu hohe Gesamtdicke führt deshalb zu hohem Verlust von Innenraumvolumen und darüber hinaus zu einem Mangel an Bauraum an den Ecken des Fahrzeuges, an denen Seitenverglasungen und Front- bzw. Heckverglasung benachbart sind (z.B. A-Säule). Aus diesem Grund ist der Wunsch nach möglichst hoher Beschussfestigkeit auch in militärisch Beschussklassen (z.B. Stanag Level 2 oder 3) in der Regel durch die zu große Dicke der entsprechenden Verglasung begrenzt. Die Forderung nach geringer Gesamtdicke des Verbundes wird erfüllt durch einen ausgewählten Aufbau der Sprödbruchmaterialien und führt aber auch zu der Anforderung möglichst dünne Laminatfolien zu verwenden, mit einer Dicke von weniger als 2,54mm (bevorzugt weniger 1,27mm, besonders bevorzugt weniger 0,76mm, von 0,38mm oder sogar noch dünner). Um solche dünnen Laminationsfolien einsetzen zu können, muss die Passgenauigkeit der aufeinanderliegenden Oberflächen der jeweiligen Scheiben so gut sein, dass die Laminationsfolie die verbleibende Dickenvariation des Zwischenraumes ausfüllen kann, ohne dass sich aber an irgendeiner Stelle die Glasplatten direkt berühren.

Bei ungeschützten Kraftfahrzeugen, sowohl bei Personen- als auch bei Lastkraftwagen, haben sich seit längerem gebogene Scheibengeometrien durchgesetzt, z.B. aufgrund von Designgesichtspunkten, und des damit verbundenen wesentlich besseren Sichtwinkels des Fahrers und einer verbesserten Aerodynamik.

Grundsätzlich ist daher auch bei beschusssicheren Verglasungen ein gebogenes Design erforderlich.

Standardmäßige Zweischeiben-Verbundsysteme können einfach hergestellt werden: Zwei Scheiben von geringer Dicke (z.B. 3mm) werden durch Trennmittel (z.B. Pulver oder Gewebematten) getrennt in einer Biegeform aufeinander gelegt und auf eine Temperatur erwärmt, bei der sich die Scheiben unter ihrer eigenen Schwerkraft aufeinander und in die Biegeform einbiegen. Die Biegetemperatur liegt dabei in der Regel bei ca. 625°C für Kalk-Natron-Glas, was einer Viskosität von ca. 10^{10,25}dPas entspricht. Die Dauer, für welche die Scheiben der Biegetemperatur ausgesetzt sind bewegt sich dabei in der Größenordnung von wenigen Minuten.

Es gibt derzeit gebogene beschusssichere Verbunde allerdings nur bis zu bestimmten Beschussklassen (z.B. B6/B7) und mit einem vergleichsweise einfachen Aufbau (Kalk-Natron-Glas).

Zum Biegen von Kfz-Verglasungen gibt es einen reichhalten Stand der Technik, der z.B. beschrieben ist in
Moreau, Lochegnies et al., Integration of thermal aspects in the finite element analysis of..., Glasverarbeitung Bd.2 (1995) S. 53-60
Lochegnies, Marion, Carpentier, Oudin; Finite element contributions to glass manufacturing control and optimisation. Part 1. Creep of flat volumes; Glass Technol. 1996, 37(4), 128-132,
oder auch beispielhaft in folgenden Anmeldungen:
DE 36 15 225 C2, DE 101 27 090 A1, US-Patent 2,827,739.

Beschussfeste Verglasungen insbesondere solche, die unterschiedliche sprödbrüchige Materialien enthalten, finden sich z.B. in den folgenden Anmeldungen: DE 10 2008 043 718 A1, WO 2009/042877 A2 und DE 42 44 048 C2.

Weiter zu erwähnen sind, die EP 2 191 962 A1, eine transparente Scheibe aus Lithium-Alumino-Silicat-Glaskeramik bestimmter Zusammensetzung, die dasselbe technische Gebiet und eine ähnliche Aufgabenstellung betrifft, aber erfindungswesentliche Merkmale, wie beispielsweise, dass mindestens zwei um einen Faktor von 1.3 bis 2 verschiedene Dicken der sprödbrüchigen Materialien im Verbund enthalten sind und dass deren der Viskosität von 10¹²dPas entsprechende Temperaturen um 10K oder mehr auseinanderliegen, unerwähnt lässt.

GB 2 078 169 A1, DE 27 58 581 (Auslegeschrift) und WO 2010/121986 A1 betreffen normale Verbundscheiben, die keine Beschussfestigkeit, insbesondere nicht nach dem Schutzlevel Stanag 2 aufweisen.

WO 2010/080699 A1 und DE 20 2007 001 565 U1 offenbaren nicht die Verwendung von zwei verschiedenen sprödbrüchigen Materialien mit dem erfindungsgemäßen Viskositätsunterschied.

Der Herstellung von dickeren und komplexer aufgebauten, gebogenen Verbundsystemen steht allerdings die besondere Herstellproblematik entgegen.

Grundsätzlich stehen die oben genannten Herstellverfahren zwar auch für dickere Verbunde mit mehreren Scheiben zur Verfügung (wie die Existenz von gebogenen B6 und B7-Verbunden zeigt) und die entsprechenden Schriften verweisen in diesem Sinne auch auf die Anwendung des Verfahrens auf mehr als zwei Scheiben. In der Praxis zeigt sich jedoch, dass es hier zunehmend zu einem Konflikt zwischen Oberflächenqualität und Konturgenauigkeit kommt. Aufgrund des signifikant höheren Auflagedruckes und der wesentlich langsameren Wärmedurchdringung wird das Prozessfenster für dieses Herstellverfahren mit zunehmender Scheibenanzahl und Laminatdicke immer enger und es wird immer schwieriger noch eine akzeptable Oberflächenqualität sicherzustellen. Theoretisch kann eine Biegung zwar auch ohne Trennmittel durchgeführt werden. In der Praxis zeigt es sich aber, dass sich eine geeignet Wahl bzw. Kombination von bekannten bzw. kommerziell erhältlichen Trennmitteln vorteilhaft auf die Oberflächengüte auswirkt. Z.B. können hierzu die üblichen Metall- oder Glasfaservliese, pulverförmige Trennmittel oder in Flüssigkeiten suspendierte Trennmittel verwandt werden. Besonders erschwerend kommt hinzu, dass ein Großteil der Scheiben oder alle größer oder gleich 5mm Dicke (teils sogar größer oder gleich 8mm, 10mm oder 15mm Dicke) sind und sich somit besonders schwer biegen lassen.

Folge dieser Schwierigkeiten ist z.B., dass es Umgehungsansätze gibt, eine nicht-ebene Außenkontur unter Verwendung ebener Sprodbruchmaterialscheiben zu erreichen, wie beispielsweise in DE 100 48 566 B4 oder DE 195 48 338 C2 beschrieben.

Eine noch speziellere Problematik stellen gebogene beschusssichere Verbunde dar, die aus mehr als einer Art Sprödbruchmaterial bestehen. Dies ist der Fall wenn sowohl (unterschiedliche) Gläser als auch Glaskeramiken oder transparenten Keramiken oder Kristalle in einem Verbund enthalten sind, oder wenn verschiedene Glasarten enthalten sind, die in ihren Viskositätskurven erheblich voneinander abweichen.

Aus dem Konflikt zwischen hoher Oberflächenqualität einerseits und hoher Passgenauigkeit der Scheiben zueinander (um die Verwendung dünner Laminatsfolien zu erlauben) andererseits, resultiert ein sehr enges Prozessfenster, insbesondere im Hinblick auf die Biegetemperatur. Eine erhöhte Temperatur führt zu vermehrten Oberflächendefekten, eine erniedrigte Temperatur führt zu schlechterer Passung der Scheiben zueinander und damit zur Notwendigkeit, dickere Laminationsfolien als gewünscht einzusetzen, was bezüglich des resultierenden Flächengewichtes und der resultierenden Gesamtdicke unerwünscht ist.

In dem Fall, dass im Laminat mehr als eine Glassorte enthalten sein soll, und die verschiedenen Glassorten in ihrem Biegeprozessfenster voneinander abweichen, muss man sich beim Standardprozess entscheiden, ob man eine schlechtere Oberflächenqualität oder (aufgrund schlechterer Passgenauigkeit) eine dickere Laminationsfolie in Kauf nimmt.

Eine ganz eigene Problematik stellen beschusssichere Verbunde dar, die mindestens eine Glaskeramikplatte enthalten. Glaskeramiken werden aus der Schmelze zunächst als Grünglas herstellt, das unmittelbar bei der Herstellung oder auch in einem nachfolgenden Prozess in eine Glaskeramik umgewandelt werden kann. Verbunde, bei denen ein Teil der oder alle Scheiben aus Glaskeramik gefertigt sind, erweisen sich als besonders günstig bzgl. der Beschusseigenschaften und werden als ebene Laminate bereits eingesetzt.

Das oben erläuterte gemeinsame Biegen von Glaskeramikgrünglas mit anderen Gläsern erweist sich aufgrund der sehr stark voneinander abweichenden Viskositätskurven (delta T bei 10^12dPas = 135K für das Beispiel Borofloat33 und Glaskeramikgrünglas) und des anschließend notwendigen Keramisierungsprozesses als nicht günstig. Ein gemeinsames Biegung von Gläsern mit bereits keramisierter Glaskeramik erweist sich aufgrund der noch stärker abweichenden Viskositäten als noch ungünstiger.

Ein gesondertes Biegen und Keramisieren der Glaskeramik und nachträgliches Einlegen in den gebogenen Verbund aus Glasscheiben ist zwar möglich. Durch den bei der Keramisierung in der Regel auftretenden Verzug erweist es sich zwar als möglich, aber als aufwändig, eine ausreichende Konturübereinstimmung zwischen der Glaskeramik und dem restlichen Verbund im Produktionsumfeld sicherzustellen, um mit den favorisierten dünnen Laminationsfolien laminieren zu können.

Eine ähnlich Problematik liegt vor, wenn der Verbund ein sprödbrüchiges Material enthalten soll, für das ein konventioneller Biegeprozess überhaupt nicht zur Verfügung steht, wie z.B. für transparente Keramiken oder Kristalle.

Aufgabe der Erfindung ist es also unterschiedlich dicke Platten, aus unterschiedlichen Materialien mit unterschiedlichen Viskositäten zu laminieren und so zu Biegen, dass sowohl eine sehr gute Oberflächenqualität, als auch eine gute Passgenauigkeit bei einfacher Herstellung erreicht wird.

Weiter ist es Aufgabe der Erfindung ein gebogenes, transparentes Scheibenset mit möglichst niedrigem Flächengewicht und geringer Dicke (kleiner 65mm, bevorzugt kleiner 63mm, besonders bevorzugt kleiner 60mm) zur Verfügung zu stellen.

Nach der vorliegenden Erfindung wurde folgender überraschender Zusammenhang erkannt:

Obwohl die große Dicke der enthaltenen Glasplatten nach herkömmlichen Erfahrungen eigentlich eine niedrigere Biegeviskosität erfordert, um die erforderlichen Biegeradien zu erhalten, wurde nach der Erfindung der umgekehrte Weg gegangen.

Es wurde eine gegenüber der üblichen sogar noch höherere niedrigste Biegeviskosität von größer als 10¹²dPas, bevorzugt sogar größer als 10^{12,5}dPas bzw. größer 10¹³dPas für das relativ höherviskose Glas gewählt. Um überhaupt einen Biegeeffekt zu erzielen, sollte die Viskostität des relativ höherviskosen Glases für die Biegung unterhalb von 10^{14,5}dPas liegen.

Die Viskosität im genannten Bereich werden dabei bestimmt, über eine VFT-Näherung gemäß DIN ISO 7884-1 aus gemäß DIN ISO 7884-4 gemessen Viskositäts-Daten.

Für typische Gläser sind in der folgenden Tabelle die Temperaturen angegeben, bei denen die genannten Materialien eine Viskosität von ca. 10¹²dPAS bzw. ca. 10¹³dPas haben.

**Tabelle 1**

| | Kalk-Na tron-Glas | Borofloat33^{®} | Borofloat40^{®} | Glaskeramikgrünglas Beispiel |
|---|---|---|---|---|
| T (ή=10¹²dPas) | 565°C | 595°C | 625°C | 730°C |
| T (ή=10¹³dPas) | 545°C | 565°C | 600°C | 695°C |

Es ist vorteilhaft, eine lange Haltedauer auf dieser Temperatur von größer 2h, bevorzugt größer 5h, besonders bevorzugt größer 10h einzustellen, für die das zu biegende relativ höherviskose Glas in Summe sich in diesen Viskositätsbereichen befinden muss. Solch extrem lange Zeiten sind in üblichen Durchlaufbiegeöfen praktisch nicht mehr darstellbar. Durch dieses ungewöhnliche Vorgehen ist es gelungen, selbst Scheibenstapel mit einer Gesamtdicke von mehr als 50mm, sogar mehr als 80mm mit guter Oberflächenqualität zu biegen.

Um die optische Qualität bzw. die Durchsichtqualität eines gebogenen und laminierten Scheibenstapels bzw. Verbundes zu bewerten wird die im Folgenden beschriebene Methode angewandt. Diese Methode wird " Fourier-Methode" genannt.

Durch einen geeigneten Mikroskopieaufbau, der einen ausreichenden Arbeitsabstand besitzt, werden digitale Bilder einer definierte Kreisstruktur aufgenommen. Die Kreisstruktur besteht aus fünf schwarzen Ringen auf weißem Hintergrund, wobei die dicke der schwarzen Ringe deren Abstand zueinander entspricht und 0,5mm beträgt. Der Durchmesser der gesamten Kreisstruktur beträgt 10mm.

Zur Bestimmung der optischen Qualität wird zum einen der gebogene und laminierte Scheibenstapel und zum anderen eine Referenz in den Strahlengang zwischen dem Mikroskopieaufbau und die Kreisstruktur gebracht und je ein Bild dieser Struktur aufgenommen. Die Referenz ist dabei ein laminierter Scheibenstapel, der aus dem gleichen Aufbau wie der zu bewertende Stapel besteht, das unbehandelt in gleicher Dickenabfolge laminiert wurde. Daraufhin werden die Fouriertransformierten der beiden so aufgenommenen Bilder bestimmt.

Da im fouriertransformierten Bild einer scharfkantigen Struktur die Amplitudenwerte hoher Frequenzen stärker sind als bei der einer weniger scharfen Struktur, ist die Gesamtsumme der Amplitudenwerte (die Histogrammsumme) über das gesamte fouriertransformierte Bild bei einem scharfen Ursprungsbild größer als beim einem Unscharfen. Eine quantitative Bewertung der optischen Qualität des gebogenen Stapels kann nun ermittelt werden, indem man die so ermittelte Amplitudensumme ins Verhältnis setzt zur entsprechenden Amplitudensumme des Referenzstapels.

Bei den hohen Oberflächenqualitäten, die durch das beschriebene Biegeverfahren erreicht werden können, liegt der so ermittelte Wert der optischen Qualität über 90%, über 95%, bevorzugt über 97,5%, besonders bevorzugt über 99% über die gesamte Fläche, mindestens aber in allen Punkten die mehr als 10cm vom Scheibenrand beabstandet sind.

Insbesondere ist es damit auch gelungen Scheibenstapel zu biegen, die Glasscheiben von stark unterschiedlicher Dicke enthalten.

Durch dieses Verfahren ist es außerdem erstmals gelungen, einen gebogenen Verbund in guter Oberflächenqualität für die Lamination mit Folien kleiner 2,57/1,27/0,38mm Dicke zwischen den sprödbrüchigen Materialien herzustellen, der zwei verschiedene sprödbrüchige Materialien enthält, deren der Viskosität von 10¹²dPas entsprechende Temperaturen um mehr als 10K bis 50K auseinander liegen (für Borofloat33® und Borofloat40^{®} beträgt diese Differenz z.B. ca. 30K).

Dabei überschreitet von mindestens der Hälfte der zwischen den sprödbrüchigen Materialien eingesetzten Laminierfolien bevorzugterweise nicht die Dicke von 0,38 mm.

Ein unterstützender Lösungsansatz ist, bewusst Temperaturgradienten über die Dicke des Scheibenstapels beim Biegen aufzubringen, dergestalt, dass die Glasart mit der relativ höherer Viskosität auf höheren Temperaturen gefahren wird. Einfach zu erreichen ist dies beispielsweise, wenn die höherviskose Glasart beim Biegen oben liegt durch eine kurze intensive Oberhitze, die im Inneren des Stapels durch die thermisch Trägheit nur sehr abgeschwächt ankommt. Verstärkt kann dies werden, indem z.B. ein Trennmittel (z.B. Gewebevlies) den thermischen Transport zwischen den höher viskosen und niedriger viskosen Materialien reduziert.

Liegen die Viskositätskurven der zwei oder mehr zu biegenden Sprödbruchmaterialien über der Temperatur soweit auseinander, dass es keinen günstigen Temperaturbereich für eine gemeinsame Biegung gibt, ist eine andere Verfahrensweise vorteilhafter. Dies ist in der Regel der Fall, wenn es keine Temperatur gibt, bei der die zu biegenden Materialien gleichzeitig eine Viskosität im Bereich von 10¹¹dPas bis 10¹⁴dPas aufweisen. Dasselbe gilt für Materialien für die eine konventionelle Biegung nicht durchführbar ist (z.B. transparente Keramiken und Kristalle) und die auf andere Weise in gebogener Geometrie hergestellt bzw. beschafft werden müssen.

Hierzu wird das Material mit der relativ höchsten Viskosität zuerst in Form gebogen (im Falle von Glaskeramik auch keramisiert) bzw. in gebogener Geometrie beschafft. Handelt es sich bei dem Material mit der relativ höchsten Viskosität um mehr als eine Scheibe, werden diese gemeinsam gebogen, im Falle von Glaskeramik auch gemeinsam keramisiert. Die erhaltene bzw. vorliegende gebogene Scheibe dient nun als konvexe und/oder konkave Biegeform für einen nächsten Biegeschritt mit dem Material, das die nächst niedrigere Viskosität aufweist. Dabei kann die als Biegeform dienende Scheibe ihrerseits in einer Form gelagert sein. Dies ist insbesondere dann von Vorteil, wenn diese Scheibe bei der Biegetemperatur der nächstzubiegenden Scheiben noch eine Restverformbarkeit aufweist. Dieser Prozess ist solange durchzuführen, bis alle sprödbrüchigen Materialien gebogen sind. Die als Biegeformen genutzten sprödbrüchigen Scheiben verbleiben in dem endgültigen Verbund, die Biegeform wird gewissermaßen jeweils zum Bestandteil des transparenten Verbundes.

In dem Fall, dass die Reihenfolge der sprödbrüchigen Materialien im Verbund so gewählt ist, dass bei Auftragung der zu einer Biegetemperatur gehörenden Viskosität über die Position auf der Flächennormale (innen => außen bezogen auf den Verbund) nur ein einzelnes Viskositätsmaximum an einer Scheibenposition auftritt und ansonsten nur monotone Viskositätsabfolgen, kann dieses Verfahren befolgt werden.

Treten mehrer Viskositätsmaxima auf, kann entweder eine der beiden viskositätsmaximalen Scheiben über einen Einzelbiegeprozess eingefügt werden, ggfs. mit der Notwendigkeit eines aufwendigeren Biegeprozesses zur Konturerreichung bzw. der Nutzung größerer Foliendicken zur Kompensation entsprechender Abweichungen.

Je nach Biegekontur und erforderlicher Dicke der Folie, kann es zu besserer Scheibenpassung führen, in diesem Falle für die gemeinsame Biegung die Sprödbruchmaterialien gegenüber der letztendlich gewünschten Abfolge so umzusortieren, dass wiederum nur ein einziges Viskositätsmaximum besteht, mithin der o.g. Prozess ebenfalls anwendbar ist und vor der Lamination dann die Sprödbruchmaterialien wieder in die gewünschte Reihenfolge zu bringen. Die dadurch verursachten Spaltdickenabweichungen lassen sich durch geometrische Überlegungen bestimmen und liegen häufig nur in einer tolerierbaren Größenordnung.

Durch die oben erläuterten Verfahrensansätze ist es erstmals gelungen, beschusssichere Scheibensysteme, die durch geeignete Material- und Dickenkombinationen trotz geringem Flächengewicht hoch beschussfest sind, wie sie beispielsweise auch in der DE 10 2010 013 641 A1 des Anmelders beschrieben sind, auch in nicht-ebener bzw. gebogener Geometrie darzustellen.

Die oben genannten Verfahrensansätze lassen sich für die verschiedensten erforderlichen Produktgeometrien anwenden. Es kann sich hierbei um einachsige Biegungen (2D) handeln, die beispielsweise für Seitenscheiben von Automobilen von Interesse sind, oder auch um 3D-Biegungen mit mehreren Radien, auch in verschiedene Raumrichtungen.

Die Wahl der Biegedauer hängt selbstverständlich auch von den gewünschten Biegeradien ab. Die angegebenen Zeiten sind für Biegeradien in der Größenordnung von 800mm oder größer typisch. Für kleinere gewünschte Biegeradien muss die Biegedauer in der Regel nochmals länger gewählt werden. Auch Radien von 200mm konnten aber über die oben erläuterten Verfahrensansätze dargestellt werden.

Die beiden beschrieben Ansätze (gemeinsamen Biegen, Ansprüche 9 bis 12 und sukzessives Biegen, Ansprüche 13, 14, 15) lassen sich selbstverständlich z.B. in der Weise kombinieren, dass Platten mit Viskositätsunterschieden, die ein gemeinsames Biegen zulassen, gemeinsam gebogen werden können und nur solche Platten deren Viskosität stärker abweicht über den Ansatz des sukzessiven Biegens integriert werden.

Als günstig erweist sich weiter die Verwendung von mind. einer sog. " Opferplatte", die bei der Biegung unterhalb der untersten Platte positioniert wird, die noch Bestandteil des Verbundes werden soll.

Die Opferplatte kann mehrere vorteilhafte Wirkungen entfalten, wie z.B.

Eine beschädigte Glasoberfläche im besonders kritischen Kontakt mit der Formoberfläche wird nicht Bestandteil des Produktverbundes;

die Auflage der untersten Scheibe auf der Form ist bei Biegeprozessen i.d.R. nicht vollflächig, dadurch kommt es zu erhöhten Auflagedrücken im Bereich der Auflageflächen und damit zu verstärkten Bildung von Oberflächendefekten. Durch Nutzung einer "Opferplatte" werden diese Oberflächendefekte nicht Teil des Produktes;

Insbesondere in dem Fall, dass die unterste bzw. die unteren Produkt-Scheibe(n) beim Biegen größer dimensioniert ist/sind, als die darüber folgenden Scheiben, kann es sein, dass die unterste Produktscheibe bzw. -scheiben nicht in der Lage ist (sind) über die Auflagepunkte auf der Form das Gesamtgewicht des Scheibenstapels zu tragen (Bruchgefahr). Hier kann die mindestens eine ausreichend dicke Opferscheibe die Last aufnehmen;

Eine günstige Variante des Biegeprozesses ist diejenige, in der sich alle Scheiben möglichst gleichförmig in die Biegeform senken. Falls die unterste Platte aufgrund von Viskositätskurve, Temperaturverteilung und Plattendicke nicht die sich am langsamsten biegende Platte des Stapels ist, kann diese gleichförmige Biegung aller Scheiben über die Bremswirkung einer geeignet gewählten Opferscheibe sichergestellt werden. Dafür wird die Glasart (Viskositätskurve) und Materialdicke der " Opferplatte" entsprechend gewählt;

Wird die Biegeform (wie z.B. im Falle des Glaskeramik enthaltenden Verbundes) Bestandteil des Verbundes, kann es sinnvoll sein, auch die Form selbst mit einer - dann gebogenen - Opferplatte zu schützen. In diesem Falle kann es daher vorteilhaft sein, eine gebogene Opferplatte auf der Form mit einer ebenen Opferplatte unterhalb des zu biegenden Scheibenstapels zu kombinieren;

Im Falle der Verwendung nicht komplett geschlossener Formen wie z.B. Formen, die die Biegekontur nur durch nicht vollflächige Auflagen definieren, verhindert bzw. reduziert die "Opferplatte" die Abbildung der Auflagestruktur der Form auf den Verbund;

In Fällen, in denen der Verbund die Formkontur nicht exakt erreicht bzw. überhaupt keine komplette Formkontur vorgegeben ist (z.B. bei sog. Rahmenformen), stellt eine "Opferplatte" sicher, dass zumindest die Passung der Scheiben zueinander immer ausreichend gut für eine Lamination mit einer dünnen Folie ist.

Diese Vorteile werden erfindungsgemäß also dadurch realisiert,
- dass als unterste Lage bei der gemeinsamen Biegung mindestens eine " Opferplatte" Verwendung findet, die nicht Bestandteil des herzustellendes Verbundes wird,
- dass die mindestens eine "Opferplatte" eine Dicke hat, die größer oder gleich der dicksten im herzustellenden Verbund vorkommenden Dicke sprödbrüchigen Materials entspricht,
- dass die mindestens eine "Opferplatte" aus dem zu biegenden sprödbrüchigen Material besteht, das die relativ höchste Viskosität aufweist, oder einem Material, das relativ eine noch höhere Viskosität aufweist.

Je nach Biegeradius, Gesamtdicke und zulässigen Oberflächendefekten und zulässigen Konturtoleranzen ist es sogar möglich, mehrere zu biegende zu einem Fenster führenden Scheibenstapel, simultan übereinander in einer Biegeform zu Biegen. Die auftretenden Absolutkonturabweichung ergeben sich aus geometrischen Überlegungen.

Um die aus der hohen Viskosität bei der Biegung resultierenden langen Biegezeiten zu verkürzen, kann auch ein beliebiges der bekannten Verfahren zur Aufbringung einer zusätzlichen Kraftkomponente in der gewünschten Biegerichtung zusätzlich genutzt werden, wie z.B. die Verwendung eines Presstempels von oben oder die geeignete Anwendung von Überdruck von oben oder Unterdruck unterhalb und ggfs. zwischen den Scheiben.

Sind in dem Verbund chemisch vorgespannte Scheiben vorgesehen, so können diese in der Regel nach dem Biegen vorgespannt werden, ohne dass es zu einer schädlichen Konturverschlechterung kommt.

Da geringe Dicken und Flächengewicht nur über komplexe Aufbauten in Kombination verschiedener Sprödbruchmaterialien erreicht werden können (siehe z.B. DE 10 2008 043 718 A1, WO 2009/042877 A2, DE 42 44 048 C2, die nur eben verfügbar waren, ist es durch o.g. Verfahren erstmals gelungen hohe Beschussklassen mit geringen Dicken und Flächengewichten auch in nicht-ebener Form darzustellen.

Insbesondere ist es erstmals gelungen eine nicht-ebene Fahrzeugverglasung, die dem Stanag Level 2 genügt mit einer Gesamtdicke von unter 60mm und Foliendicken, die an mindestens einer Position zwischen zwei Sprödbruchmaterialien mit einer Laminatfolie einer Dicke von unter 1,27mm, bevorzugt 0,76mm, besonders bevorzugt von 0,38mm oder kleiner laminiert wurden, herzustellen. Bzgl. Stanag Level wird sich bezogen auf die AEP-55 Volume1 Edition 1 (NATO) vom Februar 2005.

In allen oben genannten Fällen kann es sinnvoll und notwendig sein, dass Flächenteile am Rand nicht in der vollständigen Verbunddicke ausgeführt werden, sondern Überstände z.B. der äußersten Scheibe Sprödbruchmaterial vorgesehen werden (wie er z.B. in DE 10 048 566 B4 aus Polycarbonat vorgesehen ist). Dies kann entweder nach der Biegung durch eine entsprechende Kantenbearbeitung der Scheiben geschehen. Oder aber es werden bereits im Biegeprozess entsprechend dimensionierte Scheiben gebogen. Alle Ausführungen bzgl. Dicke und ähnlichem beziehen sich in diesem Falle sinngemäß auf den Hauptteil des Laminats, der die größte Dicke und damit die entsprechende ausgewiesene Beschussfestigkeit aufweist.

Des weiteren bezieht sich die Erfindung insbesondere auf solche nicht-ebenen beschussfesten Verglasungen, bei denen an im wesentlichen jedem Punkt der beschusssicheren Verglasung die Flächennormalen der einzelnen den Verbund bildenden sprödbrüchigen Scheiben zueinander und zu der inneren und äußeren Verbundoberfläche im wesentlichen parallel sind.

Die Verglasung kann, z.B. auf der inneren Oberfläche noch mit einer transparenten Polymerschicht mit einer typischen Dicke von 2-15mm versehen sein. Diese kann entweder analog des Vorgehens der sukzessiven Biegung bei einer materialspezifisch üblichen Biegetemperatur in die entsprechende Scheibe Sprödbruchmaterial gebogen werden oder unter zunächst elastischer Biegung ohne Temperatureinfluss vor dem Laminationsprozess aufgebracht, über den Laminationsprozess auflaminiert und ggfs. entspannt werden.

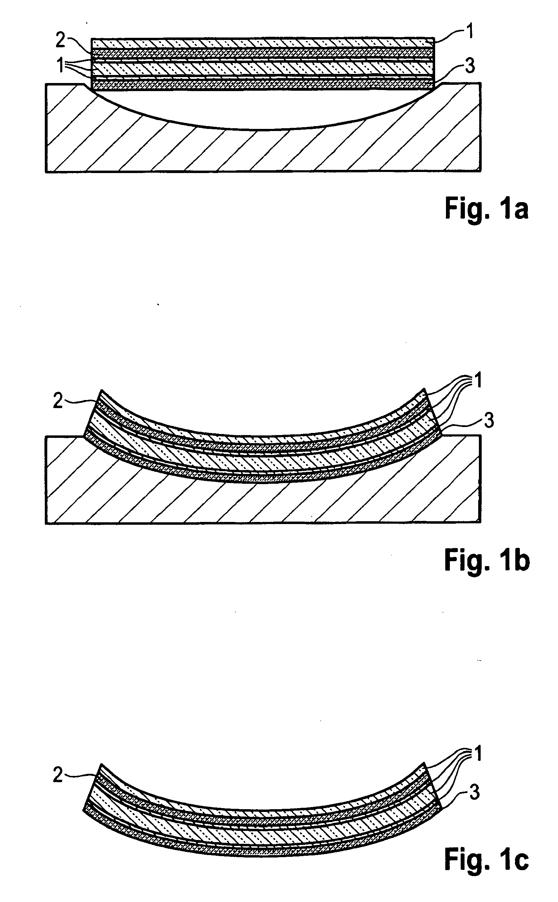

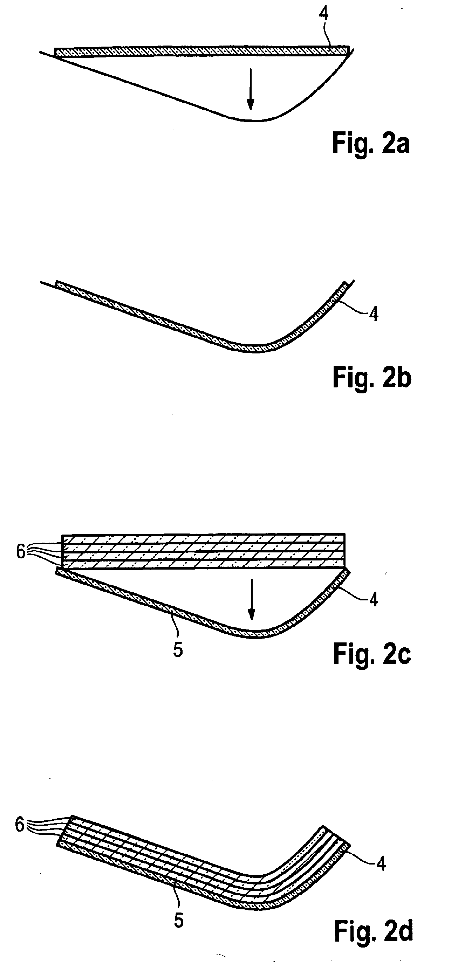

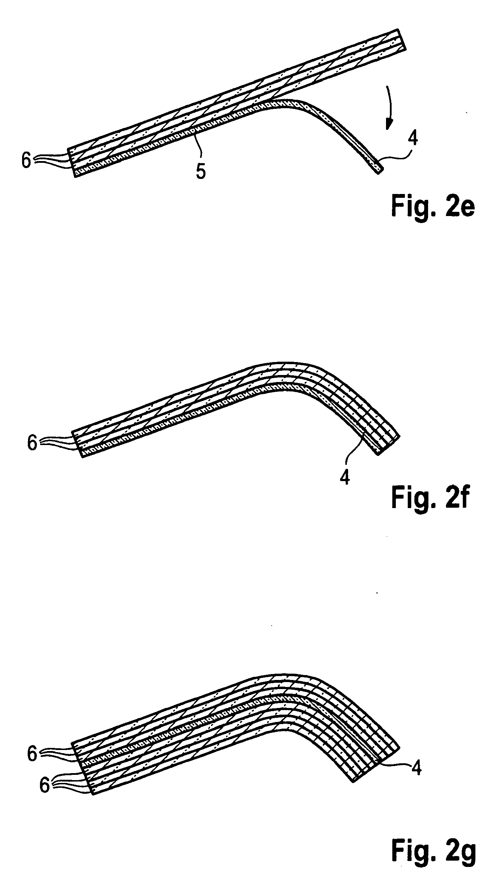

Die Erfindung soll anhand der Ausführungsbeispiele zu Fig. 1 und Fig. 2 näher erläutert werden.
Fig. 1 (a-c) zeigt das gemeinsame Biegen von Borofloat33 (1) und Borofloat40 (2) mit einer "Opferplatte" (3) aus Borofloat40 bei einer Temperatur von 580°C. Der Biegeradius beträgt 2300mm, die Scheiben haben eine Abmessung von ca. 600mmx600mm. Die zur Viskosität von 10¹²dPas gehörigen Temperaturen liegen bei 595°C (Borofloat33) bzw. 625°C (Borofloat40). Bei der gewählten Temperatur von 580°C hat Borofloat33 eine Viskosität von ca. 10^{12,4}dPas und Borofloat40 von ca. 10^{13,7}dPas. Die Dauer der Biegung beträgt 12h.
Fig. 2 (a-g) veranschaulicht das Biegen eines Glaskeramik (4) enthaltenden Borofloat-Verbundes in mehreren Schritten:
   1. Biegung und Keramisierung der Glaskeramik (4) (Fig. 2a/2b)
   2. Nutzung der Glaskeramik (4) als konkave Biegeform (5) für die Biegung der innenseitig liegenden Borofloat-Scheiben (6) (Fig. 2c/2d)
   3. Nutzung der Glaskeramik (4) als konvexe Biegeform (5) für die Biegung der außenseitig liegenden Borofloat-Scheiben (6) (Fig. 2e/2f)
   4. Zusammensetzung des kompletten resultierenden Verbundes mit der Glaskeramik (4) im Inneren (Fig. 2g)

## Patentansprüche

1. Laminiertes, transparentes Scheibenset, dessen Beschussfestigkeit dem Schutzlevel Stanag 2 entspricht, mit einer Gesamtdicke kleiner als 65 mm, mit Scheiben aus sprödbrüchigen Materialien, wobei mindestens zwei um einen Faktor von 1.3 bis 2 verschiedene Dicken der sprödbrüchigen Materialien im Verbund enthalten sind und transparenten Zwischenschichten aus Gießharz oder Polymerfolien, mit einer Splitterschutzschicht, wobei Teile des Scheibensets aus der Ebene der Scheiben abweichen, d.h. gebogen sind,
**dadurch gekennzeichnet,**
**dass** es mind. zwei verschiedene sprödbrüchige Materialien enthält,
wobei es sich bei den sprödbrüchigen Materialien um verschiedene Gläser, Spezialgläser, Glaskeramiken, transparente Keramiken, Kristallen handelt, deren der Viskosität von 10¹²dPas entsprechenden Temperaturen um 10K oder mehr auseinander liegen.

2. Laminiertes, transparentes Scheibenset nach Anspruch 1,
**dadurch gekennzeichnet,**
**dass** die nach der Fourier-Methode gemessene Durchsichtsqualität mindestens in allen Punkten die mehr als 10cm vom Scheibenrand beabstandet sind einen Wert von größer als 90%, bevorzugt größer als 97,5%, besonders bevorzugt größer als 99% aufweisen.

3. Laminiertes, transparentes Scheibenset nach den Ansprüchen 1 und 2,
**dadurch gekennzeichnet,**
**dass** die Dicken der zwischen den sprödbrüchigen Materialien eingesetzten Zwischenschichten 1,27, bevorzugt 0,76, besonders bevorzugt 0,38mm an mindestens einer Stelle nicht überschreiten.

4. Verfahren zur Herstellung eines laminierten, transparenten Scheibensets nach einem oder mehreren der Ansprüche 1 bis 3,
**dadurch gekennzeichnet,**
**dass** mind. zwei der aus sprödbrüchigem Material gebildeten Scheiben verschiedener Gläser gemeinsam gebogen werden, wobei die Viskosität, desjenigen Glases mit der relativ höchsten Viskosität bei der Biegung >10¹²dPas, bevorzugt >10^{12,5}dP.as, besonders bevorzugt >10¹³dPas beträgt.

5. Verfahren zur Herstellung eines laminierten, transparenten Scheibensets nach einem oder mehreren der Ansprüche 1 bis 3,
**dadurch gekennzeichnet,**
**dass** alle aus sprödbrüchigem Material gebildeten Scheiben gemeinsam gebogen werden, wobei die Viskosität, desjenigen Glases mit der relativ höchsten Viskosität bei der Biegung >10¹²dPas, bevorzugt >10¹²>5dPas, besonders bevorzugt >10¹³dPas beträgt.

6. Verfahren zur Herstellung eines laminierten, transparenten Scheibensets nach den Ansprüchen 4 oder 5,
**dadurch gekennzeichnet,**
**dass** die Gesamtdauer, in welcher die Biegung stattfindet >2h, bevorzugt >5h, besonders bevorzugt >10h beträgt.

7. Verfahren zur Herstellung eines laminierten, transparenten Scheibensets nach einem oder mehreren der Ansprüche 1 bis 3,
**dadurch gekennzeichnet,**
**dass** die Herstellung in mehreren Biegeschritten erfolgt, wobei die jeweils sprödbrüchigen Materialien, beispielsweise eine Glaskeramik, die bei einer möglichen Biegetemperatur eines zweiten oder weiteren Materials eine höhere Viskosität aufweisen, in bereits gebogener Kontur als negative oder positive bzw. konvexe oder konkave Biegeform für das zweite oder weitere Material dienen.

8. Verfahren zur Herstellung eines laminierten, transparenten Scheibensets nach Anspruch 7,
**dadurch gekennzeichnet,**
**dass** die als Biegeform dienende sprödbrüchige Materialscheibe Bestandteil des Verbundes wird.

9. Verfahren zur Herstellung eines laminierten, transparenten Scheibensets nach den Ansprüchen 7 und 8,
**dadurch gekennzeichnet,**
**dass** für die mehreren Biegeschritte die Scheibenreihenfolge gegenüber dem herzustellenden Verbund verändert wird.

10. Verfahren zur Herstellung eines laminierten, transparenten Scheibensets nach einem oder mehreren der Ansprüche 4 bis 9,
**dadurch gekennzeichnet,**
**dass** als unterste Lage bei der gemeinsamen Biegung mindestens eine "Opferplatte" Verwendung findet, die nicht Bestandteil des herzustellenden Verbundes wird.

11. Verfahren zur Herstellung eines laminierten, transparenten Scheibensets nach Anspruch 10,
**dadurch gekennzeichnet,**
**dass** die mindestens eine "Opferplatte" eine Dicke aufweist, die größer oder gleich ist der dicksten im herzherzustellenden Verbund vorkommenden Scheibe sprödbrüchigen Materials.

12. Verfahren zur Herstellung eines laminierten, transparenten Scheibensets nach Anspruch 10 und/oder 11,
**dadurch gekennzeichnet,**
**dass** die mindestens eine "Opferplatte" aus dem zu biegenden sprödbrüchigen Material gewählt wird, das die relativ höchste Viskosität aufweist.

13. Verfahren zur Herstellung eines laminierten, transparenten Scheibensets nach einem oder mehreren der Ansprüchen 4 bis 12,
**dadurch gekennzeichnet,**
**dass** zumindest zeitweise während des Biegens ein Temperaturgradient verursacht wird, dergestalt, dass die viskositätkurvenbedingten Viskositätsunterschiede der sprödbrüchigen Materialien durch den Temperaturgradient zumindest teilweise kompensiert werden.

14. Verwendung eines laminierten, transparenten Scheibensets nach den Ansprüchen 1 bis 3 hergestellt und gebogen nach einem oder mehreren der Ansprüche 4 bis 13 als beschusssichere, bruch- und schlagfeste Verglasungen beispielsweise für Fahrzeuge, Flugzeuge und Schiffe, die den Schutzlevel Stanag 2 erfüllen.

## Claims

1. Laminated, transparent set of panes, the bullet-proofness of which complies with protective level Stanag 2, with an overall thickness of less than 65 mm, having panes made of brittle materials, wherein at least two thicknesses of the brittle materials which differ by a factor of 1.3 to 2 are present in the composite, and transparent interlayers made of casting resin or polymer films having an antishatter layer, wherein parts of the set of panes deviate from the plane of the panes, i.e. are bent,
**characterized**
**in that** it contains at least two different brittle materials, wherein the brittle materials are various glasses, special glasses, glass-ceramics, transparent ceramics, crystals, the temperatures of which, corresponding to the viscosity of 10¹² dPas, lie 10 K or more apart.

2. Laminated, transparent set of panes according to Claim 1,
**characterized**
**in that** the transparency quality measured by the Fourier method has a value of greater than 90%, preferably greater than 97.5%, particularly preferably greater than 99% at least in all points at a distance of more than 10 cm from the pane edge.

3. Laminated, transparent set of panes according to Claims 1 and 2,
**characterized**
**in that** the thicknesses of the interlayers inserted between the brittle materials do not exceed 1.27 mm, preferably 0.76 mm, particularly preferably 0.38 mm at at least one location.

4. Process for producing a laminated, transparent set of panes according to one or more of Claims 1 to 3,
**characterized**
**in that** at least two of the panes of different glasses formed from brittle material are bent together, wherein the viscosity of the glass having the relatively highest viscosity during the bending is > 10¹² dPas, preferably > 10^{12.5} dPas, particularly preferably > 10¹³ dPas.

5. Process for producing a laminated, transparent set of panes according to one or more of Claims 1 to 3,
**characterized**
**in that** all of the panes formed from brittle material are bent together, wherein the viscosity of the glass having the relatively highest viscosity during the bending is > 10¹² dPas, preferably > 10^{12.5} dPas, particularly preferably > 10¹³ dPas .

6. Process for producing a laminated, transparent set of panes according to Claim 4 or 5,
**characterized**
**in that** the overall duration of the bending is > 2 h, preferably > 5 h, particularly preferably > 10 h.

7. Process for producing a laminated, transparent set of panes according to one or more of Claims 1 to 3,
**characterized**
**in that** the production takes place in a plurality of bending steps, wherein the respective brittle materials, for example a glass-ceramic, which have a higher viscosity at a possible bending temperature of a second or further material serve with an already bent contour as a negative or positive or convex or concave bending mould for the second or further material.

8. Process for producing a laminated, transparent set of panes according to Claim 7,
**characterized**
**in that** the pane of brittle material serving as the bending mould will become a constituent part of the composite.

9. Process for producing a laminated, transparent set of panes according to Claims 7 and 8,
**characterized**
**in that** the sequence of panes is changed for the plurality of bending steps compared to the composite to be produced.

10. Process for producing a laminated, transparent set of panes according to one or more of Claims 4 to 9,
**characterized**
**in that** the lowermost layer used for the common bending is at least one "sacrificial plate", which will not become a constituent part of the composite to be produced.

11. Process for producing a laminated, transparent set of panes according to Claim 10,
**characterized**
**in that** the at least one "sacrificial plate" has a thickness which is greater than or equal to the thickest pane of brittle material present in the composite to be produced.

12. Process for producing a laminated, transparent set of panes according to Claim 10 and/or 11,
**characterized**
**in that** the at least one "sacrificial plate" is selected from the brittle material to be bent which has the relatively highest viscosity.

13. Process for producing a laminated, transparent set of panes according to one or more of Claims 4 to 12,
**characterized**
**in that** a temperature gradient is created at least temporarily during the bending, such that the viscosity-curve-related differences in viscosity of the brittle materials are at least partially compensated for by the temperature gradient.

14. Use of a laminated, transparent set of panes according to Claims 1 to 3 produced and bent according to one or more of Claims 4 to 13 as bulletproof, unbreakable and shockproof glazing, for example for vehicles, aircraft and ships, which complies with protective level Stanag 2.

## Revendications

1. Ensemble de vitres laminé et transparent, dont la résistance aux balles correspond au niveau de protection Stanag 2, avec une épaisseur totale inférieure à 65 mm, avec des vitres en matériaux fragiles, dans lequel au moins deux épaisseurs différentes d'un facteur de 1,3 à 2 des matériaux fragiles sont contenues dans le composite et avec des couches intermédiaires transparentes en résine de coulée ou en feuilles de polymère, avec une couche de protection contre les éclats, dans lequel des parties de l'ensemble de vitres s'écartent, c'est-à-dire sont incurvées hors du plan des vitres, **caractérisé en ce qu'**il comprend au moins deux matériaux fragiles différents, les matériaux fragiles étant des verres, des verres spéciaux, des vitrocéramiques, des céramiques transparentes, des cristaux différent(e)s, dont les températures correspondant à une viscosité de 10¹² dPas diffèrent l'une de l'autre de 10 K ou plus.

2. Ensemble de vitres laminé et transparent selon la revendication 1, **caractérisé en ce que** la qualité de transparence mesurée par la méthode de Fourier présente, au moins dans tous les points qui sont distants de plus de 10 cm du bord de vitres, une valeur supérieure à 90 %, de préférence supérieure à 97,5 %, de préférence encore supérieure à 99 %.

3. Ensemble de vitres laminé et transparent selon les revendications 1 et 2, **caractérisé en ce que** les épaisseurs des couches intermédiaires intercalées entre les matériaux fragiles ne dépassent pas, en au moins un point, 1,27, de préférence 0,76, et de préférence encore 0,38 mm.

4. Procédé de fabrication d'un ensemble de vitres laminé et transparent selon une ou plusieurs des revendications 1 à 3, **caractérisé en ce que** l'on courbe en commun au moins deux vitres de verres différents formées en un matériau fragile, dans lequel la viscosité du verre présentant la viscosité relativement la plus élevée vaut lors de la courbure > 10¹² dPas, de préférence > 10^{12,5} dPas, et de préférence encore > 10¹³ dPas.

5. Procédé de fabrication d'un ensemble de vitres laminé et transparent selon une ou plusieurs des revendications 1 à 3, **caractérisé en ce que** l'on courbe en commun toutes les vitres formées en un matériau fragile, dans lequel la viscosité du verre présentant la viscosité relativement la plus élevée vaut lors de la courbure > 10¹² dPas, de préférence > 10^{12,5} dPas, et de préférence encore > 10¹³ dPas.

6. Procédé de fabrication d'un ensemble de vitres laminé et transparent selon les revendications 4 ou 5, **caractérisé en ce que** la durée totale, au cours de laquelle on effectue la courbure, vaut > 2 h, de préférence > 5 h, et de préférence encore > 10 h.

7. Procédé de fabrication d'un ensemble de vitres laminé et transparent selon une ou plusieurs des revendications 1 à 3, **caractérisé en ce que** l'on effectue la fabrication en plusieurs étapes de courbure, dans lequel les matériaux respectivement fragiles, par exemple une vitrocéramique, qui présentent une viscosité plus élevée à une température de courbure possible d'un deuxième ou d'un autre matériau, servent dans un contour déjà courbé de gabarit négatif ou positif ou encore convexe ou concave pour le deuxième ou l'autre matériau.

8. Procédé de fabrication d'un ensemble de vitres laminé et transparent selon la revendication 7, **caractérisé en ce que** la vitre de matériau fragile servant de gabarit devient un composant du composite.

9. Procédé de fabrication d'un ensemble de vitres laminé et transparent selon les revendications 7 et 8, **caractérisé en ce que**, pour les multiples étapes de courbure, on change l'ordre des vitres par rapport au composite à fabriquer.

10. Procédé de fabrication d'un ensemble de vitres laminé et transparent selon une ou plusieurs des revendications 4 à 9, **caractérisé en ce que** l'on utilise comme couche la plus basse, lors de la courbure commune, au moins une "plaque sacrificielle" qui ne devient pas un composant du composite à fabriquer.

11. Procédé de fabrication d'un ensemble de vitres laminé et transparent selon la revendication 10, **caractérisé en ce que** ladite au moins une "plaque sacrificielle" présente une épaisseur, qui est supérieure ou égale à la plus épaisse vitre de matériau fragile contenue dans le composite à fabriquer.

12. Procédé de fabrication d'un ensemble de vitres laminé et transparent selon la revendication 10 et/ou 11, **caractérisé en ce que** l'on choisit ladite au moins une "plaque sacrificielle" dans le matériau fragile à courber, qui présente la viscosité relativement la plus élevée.

13. Procédé de fabrication d'un ensemble de vitres laminé et transparent selon une ou plusieurs des revendications 4 à 12, **caractérisé en ce que** l'on crée au moins temporairement pendant la courbure un gradient de température, de telle manière que les différences de viscosité des matériaux fragiles, définies par les courbes de viscosité, soient compensées au moins en partie par le gradient de température.

14. Utilisation d'un ensemble de vitres laminé et transparent fabriqué selon les revendications 1 à 3 et courbé selon une ou plusieurs des revendications 4 à 13 comme vitrages à l'épreuve des balles, résistants à l'effraction et aux chocs, en particulier pour des véhicules, des avions et des bateaux, qui assurent le niveau de protection Stanag 2.
